(19) Europäisches Patentamt / European Patent Office / Office européen des brevets

(11) **EP 4 030 333 A1**

(12) **DEMANDE DE BREVET EUROPEEN**

(43) Date de publication:
**20.07.2022 Bulletin 2022/29**

(21) Numéro de dépôt: **21305044.6**

(22) Date de dépôt: **15.01.2021**

(51) Classification Internationale des Brevets (IPC):
**G06F 30/27** (2020.01)   **G06F 30/28** (2020.01)
**G06F 113/08** (2020.01)

(52) Classification Coopérative des Brevets (CPC):
**G06F 30/28; G06F 30/27;** G06F 2113/08

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Bull SAS**
**78340 Les Clayes-sous-Bois (FR)**

(72) Inventeurs:
• **NICOLETTI, Léo**
  **31400 Toulouse (FR)**
• **GIORKALLOS, Alexis**
  **38210 Montaud (FR)**
• **GORET, Gaël**
  **38140 Réaumont (FR)**

(74) Mandataire: **Novagraaf Technologies**
**Bâtiment O2**
**2, rue Sarah Bernhardt**
**CS90017**
**92665 Asnières-sur-Seine Cedex (FR)**

(54) **SIMULATION DU COMPORTEMENT D'UN VEHICULE DANS UN FLUIDE PAR RESEAU DE NEURONES HAMILTONIEN**

(57)   Procédé de simulation du comportement d'un système (20) composé d'un sous-système (10), tel qu'un véhicule aérien, dans un environnement physique (21) constitué d'un fluide incompressible, comportant
- l'entraînement d'un réseau de neurones multicouche (HNN) au moyen d'un ensemble d'apprentissage associant des coordonnées (x, y) dans ledit environnement physique (21) et des valeurs respectives d'un gradient de la fonction de courant ($\psi$) auxdites coordonnées (x,y), et d'une fonction de coût configurée pour minimiser une erreur entre un gradient ($S_\psi$) de la sortie dudit réseau de neurones et ledit gradient de la fonction de courant ;
- l'utilisation dudit réseau de neurones pour prédire une valeur de fonction de courant ($\psi$) et d'un champ de vitesse (u) en lui fournissant en entrée des coordonnées.

Fig. 1

**Description**

DOMAINE DE L'INVENTION

La présente invention est relative à la simulation d'un système comportant des sous-systèmes modélisés par des lois physiques. En particulier, elle peut concerner la simulation du comportement de tout ou partie d'un véhicule, par exemple à des fins de conception du véhicule afin d'en étudier son comportement.

Plus spécifiquement, l'invention propose un procédé de simulation du comportement de tout ou partie d'un véhicule, notamment aérien, au sein d'un système, par substitution des calculs basés sur la modélisation par lois physiques par des prédictions basées sur un modèle constitué par un réseau de neurones multicouche.

CONTEXTE DE L'INVENTION

La conception d'un véhicule, notamment d'un véhicule aérien tel qu'un hélicoptère ou un avion, est un processus complexe engageant de nombreuses personnes pendant plusieurs années et un budget conséquent, qu'il s'agisse d'une conception d'un nouveau véhicule ou d'une nouvelle version d'un véhicule existant.

Les outils numériques, notamment la simulation, permettent de minimiser ces coûts, en permettant de tester différentes configurations de la conception (ou « design ») d'éléments du véhicule en fonction de l'environnement, cet environnement comprenant notamment les autres éléments du véhicule ainsi que les contraintes physiques dues au couplage du véhicule avec l'environnement extérieur (notamment la couche limite de frottement de l'air autour d'une aile). Ces simulations se basent sur des modèles physiques décrivant le comportement, notamment aérodynamique, des différents éléments du véhicule en fonction de son environnement et des interfaces entre le véhicule et l'environnement.

Les simulations peuvent permettre de déterminer l'impact de chaque choix de conception et d'ainsi explorer un plus grand nombre de possibilités qu'il ne serait envisageable de faire en tests réels. Il est notamment possible de déterminer l'impact de chaque choix pour un élément du véhicule sur l'ensemble du véhicule et, notamment, d'en tirer des conclusions sur le coût global de fabrication, sur la consommation énergétique, sur le bruit généré, etc. Dans l'ingénierie manufacturière, ce processus itératif s'appelle la conception générative (ou « generative design » en langue anglaise).

Toutefois, cette problématique est extrêmement complexe, car un véhicule aérien est, en soi, un système complexe formé de très nombreux éléments différents. En outre, leurs interactions et les interactions avec l'environnement sont nombreuses et difficiles et coûteuses à modéliser de façon précise par des lois physiques. En outre, l'aspect dynamique de l'environnement doit être pris en compte puisqu'un véhicule aérien traverse, au cours d'un vol, différentes phases (montée, vol stationnaire, descente, atterrissage...), chacun impliquant des contraintes physiques (notamment aérodynamique) différentes sur l'appareil.

Malgré la montée en puissance des plateformes de traitement de l'information, un compromis doit traditionnellement être effectué entre la précision des modèles physiques décrivant les comportements de chaque élément du véhicule simulé et le coût informatique de la simulation (coût de la plateforme et temps de traitement).

Ainsi, certains modèles physiques utilisés en dynamique des fluides computationnelle (CFD pour « Computational Fluid Dynamics ») tels que ceux basés sur les équations de Navier-Stokes, demeurent trop coûteuses, en temps de calcul, pour pouvoir être utilisés en simulation industrielle. En outre, l'existence d'une solution n'est pas démontrée et fait même l'objet d'un appel à la communauté mathématique.

Dès lors, des approximations sont en général utilisées. L'utilisation de la décomposition de Reynolds appliquée aux solutions de l'équation de Navier-Stokes permet de simplifier le problème en faisant disparaitre les fluctuations de périodes et d'amplitudes courtes. La méthode est connue sous le nom de moyenne de Reynolds ou sous le terme anglais de RANS pour « Reynolds-averaged Navier-Stokes », ou encore « équation de Navier-Stokes moyennées ». Toutefois, cet allégement des calculs set fait au détriment de la précision.

Ces problématiques liées à la mise en œuvre pratique de la modélisation physiques des éléments constitutifs d'un avion sont par exemple présentées dans l'article de A. Abbas-Bayoumi et K. Becker, « An industrial view on numerical simulation for aircraft aerodynamic design », in Journal of Mathematics in Industry, 1(1): 10, 2011. doi: 10.1186/2190-5983-1-10.

Il a été proposé de substituer à certains modèles physiques de la simulation des modèles basés sur l'apprentissage machine.

L'article "A Machine Learning Based Body Force Model for Analysis of Fan-Airframe Aerodynamic Interactions" de Luis López de Vega, Guillaume Dufour, Florian Blanc et William Thollet, in Global Power and Propulsion Society Conférence 2018, 7 May 2018 - 9 May 2018 (Montréal, Canada), propose notamment de substituer un modèle à apprentissage machine (ou « machine-learning model » en langue anglaise) à une partie de la modélisation des turbulences par la méthode de Reynolds. Le modèle en question est un réseau de neurones de type perceptron multicouches. L'article montre par ailleurs des problèmes de précision du modèle neuronal et propose en particulier un procédé pour améliorer sa précision.

Toutefois, ces travaux ne visent pas l'ensemble des problématiques auxquelles la simulation de système complexe est confrontée, et, en particulier à la simulation de certaines variables de la simulation du fluide dans lequel est baigné le véhicule.

En particulier, la fonction de courant du fluide nécessite d'être calculée en tout point du fluide, ce qui engendre un coût computationnel important.

RESUME DE L'INVENTION

Un objectif de la présente invention est de fournir une méthode et un dispositif de simulation palliant au moins partiellement les inconvénients précités.

Plus particulièrement, selon des modes de réalisation, elle vise à fournir une simulation de la fonction de courant basé sur un réseau de neurones multicouches. Un tel réseau de neurones permet de déporter le coût computationnel vers une phase d'apprentissage (qui est effectuée en amont et n'impacte pas la simulation proprement dite), et de présenter un temps de calcul constant lors de la simulation en utilisant le réseau en mode inférence.

Également, l'invention se base sur un réseau de neurones entrainé avec une fonction de coût particulière et basée sur la réalité physique des fluides simulés.

Plus précisément, une mise en œuvre de l'invention propose un procédé de simulation du comportement d'un système composé d'un sous-système, tel que tout ou partie d'un véhicule aérien, dans un environnement physique constitué d'un fluide incompressible, comportant

- l'entraînement d'un réseau de neurones multicouche au moyen d'un ensemble d'apprentissage associant des coordonnées x, y dans ledit environnement physique et des valeurs respectives d'un gradient de la fonction de courant $\psi$ auxdites coordonnées x,y, et d'une fonction de coût configurée pour minimiser une erreur entre un gradient $S\psi$ de la sortie dudit réseau de neurones et ledit gradient de la fonction de courant ;

- l'utilisation dudit réseau de neurones pour prédire une valeur de fonction de courant $\psi$ et d'un champ de vitesse en lui fournissant en entrée des coordonnées.

Suivant des modes de réalisation préférés, l'invention comprend une ou plusieurs des caractéristiques suivantes qui peuvent être utilisées séparément ou en combinaison partielle entre elles ou en combinaison totale entre elles :

- la fonction de coût $\mathcal{L}$ s'exprime

$$\mathcal{L} = \left\| \frac{dx}{dt} - \frac{d\psi}{dy} \right\|^2 + \left\| \frac{dy}{dt} + \frac{d\psi}{dx} \right\|^2$$

où t représente le temps ;

- l'ensemble d'apprentissage est généré en déterminant la valeur $\psi(x,y,t)$ de ladite fonction de courant, pour des coordonnées, x,y choisies aléatoirement dans ledit environnement physique ; le temps d'intérêt t d'une simulation peut par exemple être fixé (on parle de « *snapshot* ») pour la suite de la modélisation.

- la valeur $\psi(x,y,t)$ est déterminée sur la base d'un modèle physique utilisé en dynamique des fluides computationnelle, CFD, tels que ceux basés sur les équations de Navier-Stokes ;

- le véhicule aérien est un avion. Il peut également s'agir d'un hélicoptère, d'un drone, etc. ou des parties d'un tel véhicule (rotor, etc.). Des applications hors du domaine aérien sont également possibles.

Selon un mode de réalisation, l'invention concerne également un programme d'ordinateur comprenant des instructions qui, lorsque le programme est exécuté par un ordinateur, conduisent celui-ci à mettre en œuvre la méthode précédemment décrite.

Selon un autre mode de réalisation, l'invention concerne aussi un dispositif de simulation du comportement d'un système composé d'un sous-système, tel que tout ou partie d"un véhicule aérien, dans un environnement physique constitué d'un fluide incompressible, comportant des moyens pour

- l'entraînement d'un réseau de neurones multicouche au moyen d'un ensemble d'apprentissage associant des coordonnées x, y dans ledit environnement physique et des valeurs respectives d'un gradient de la fonction de courant $\psi$ auxdites coordonnées x,y, et d'une fonction de coût configurée pour minimiser une erreur entre un gradient $S_\psi$, de la sortie dudit réseau de neurones et ledit gradient de la fonction de courant ; et pour

- l'utilisation dudit réseau de neurones pour prédire des valeurs de fonction de courant $\psi$ et d'un champ de vitesse u en lui fournissant en entrée des coordonnées.

Suivant des modes de réalisation préférés, l'invention comprend une ou plusieurs des caractéristiques suivantes qui peuvent être utilisées séparément ou en combinaison partielle entre elles ou en combinaison totale entre elles :

- la fonction de coût $\mathcal{L}$ s'exprime

$$\mathcal{L} = \left\| \frac{dx}{dt} - \frac{d\psi}{dy} \right\|^2 + \left\| \frac{dy}{dt} + \frac{d\psi}{dx} \right\|^2$$

où t représente le temps ;

le dispositif comporte en outre des moyens pour générer ledit ensemble d'apprentissage en déterminant la valeur $\psi(x,y,t)$ de ladite fonction de courant, pour des coordonnées, x,y choisis aléatoirement et au temps t dans ledit environnement physique ; ce temps peut être fixé dans la suite de la simulation.

- la valeur ψ(x,y,t) est déterminée sur la base d'un modèle physique utilisé en dynamique des fluides computationnelle, CFD, tels que ceux basés sur les équations de Navier-Stokes ;

- le véhicule aérien est un avion ; Il peut également s'agir d'un hélicoptère, d'un drone, etc. ou des parties d'un tel véhicule (rotor, etc.). Des applications hors du domaine aérien sont également possibles.

- Le dispositif comporte en outre une interface pour récupérer lesdites coordonnées et fournir lesdites valeurs à un outil de simulation.

Selon un mode de réalisation, l'invention concerne également un serveur ou un ensemble de serveurs, mettant en œuvre un dispositif tel que précédemment décrit et comportant des interfaces permettant de le rendre accessible sous la forme d'un service disponible via un nuage informatique.

D'autres caractéristiques et avantages de l'invention apparaîtront à la lecture de la description qui suit d'un mode de réalisation préféré de l'invention, donnée à titre d'exemple et en référence aux dessins annexés

BREVE DESCRIPTION DES FIGURES

Les dessins annexés illustrent l'invention :

La figure 1 représente schématiquement un exemple de système composé d'un véhicule aérien et de son environnement selon un mode de réalisation de l'invention.

La figure 2 illustre de façon schématique un réseau de neurones multicouche tel que pouvant être utilisé dans le cadre d'une mise en œuvre selon un mode de réalisation de l'invention.

La figure 3 illustre schématiquement un dispositif de simulation selon un mode de réalisation de l'invention.

La figure 4 illustre les performances en apprentissage d'un réseau de neurones selon un mode de réalisation de l'invention

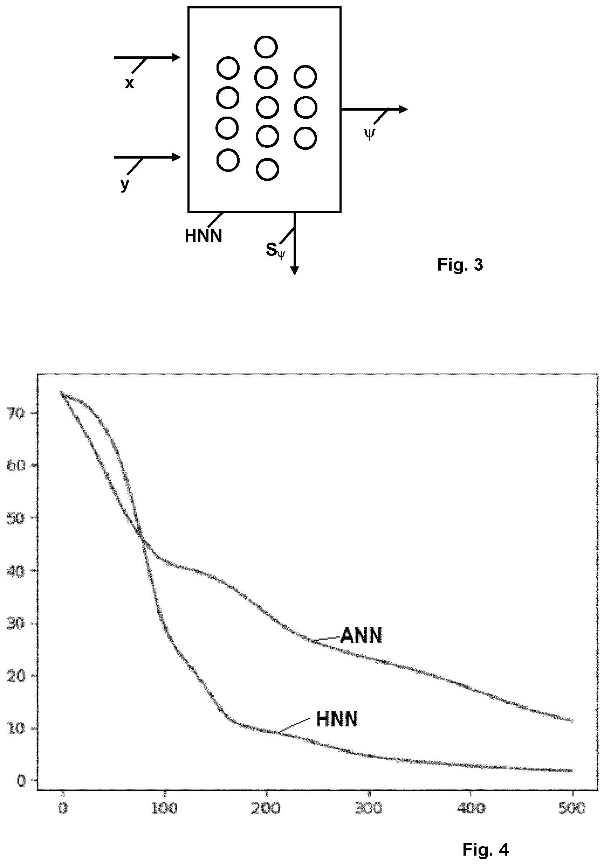

La figure 4 illustre les performances en prédiction d'un réseau de neurones selon un mode de réalisation de l'invention

DESCRIPTION DETAILLEE DE MODES DE REALISATION DE L'INVENTION

L'invention est susceptible de s'appliquer à toute simulation d'un système complexe modélisé par des lois physiques comportementales, et notamment des lois de la dynamique des fluides. À titre d'exemples non exhaustifs, elle peut ainsi concerner la simulation de systèmes météorologiques, par exemple, ou bien le comportement des courants océaniques, ou encore le comportement d'un sous-système solide vis-à-vis d'un environnement constitué d'un milieu fluide.

Ce dernier cas peut concerner un sous-système tel qu'une éolienne dans le milieu fluide de l'air, ou d'autres dispositifs fonctionnant de manière similaire, c'est-à-dire avec des pales plongées dans un flux de fluide : compresseurs radiaux et axiaux dans les turboréacteurs d'avion, dans les dispositifs de climatisation, dans les gazoducs, dans les turbocompresseurs, etc.

L'invention peut également s'appliquer à différents types de véhicules dont on veut étudier le comportement lors d'un déplacement dans un fluide (typiquement l'atmosphère terrestre). Il peut notamment s'agir de véhicules aériens (avions, drones, hélicoptères...) à vitesse subsonique, ou de parties aérodynamique d'un tel véhicule, (ou « airfoil » en anglais), comme par exemple une aile d'avion, une pale de rotor d'hélicoptère, une ailette de compresseur de turboréacteur, de turbine d'hélicoptère (« turbomoteur »), etc.

Comme il a été vu en introduction, la simulation du comportement de véhicules au sein d'un fluide (l'atmosphère à des vitesses subsoniques) par les lois physiques de l'aérodynamique engendre des difficultés de mise en œuvre, notamment en termes de précisions et de coût informatique.

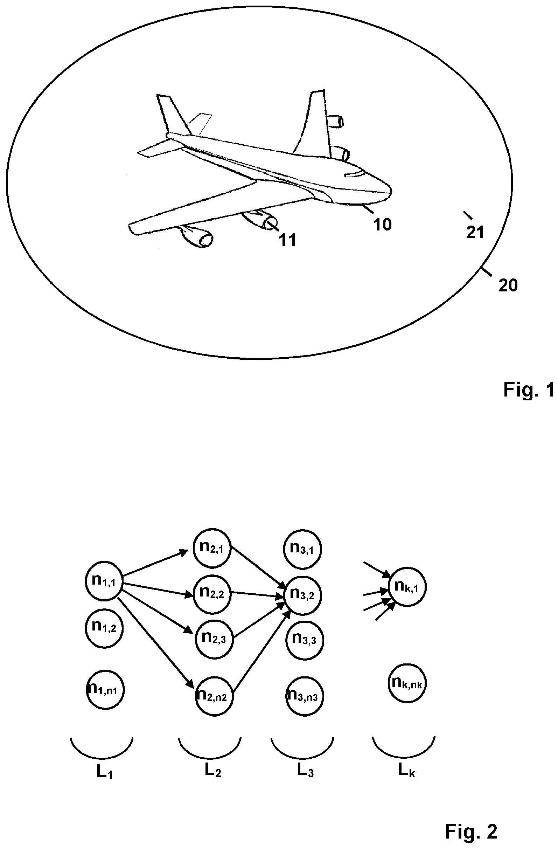

La figure 1 illustre un exemple d'application à un véhicule aérien tel qu'un avion, sans perte de généralité.

Le procédé et le dispositif selon l'invention visent à simuler le comportement d'un système 20 composé du véhicule aérien 10 dans son environnement physique 21 ambiant. En effet, afin de simuler le comportement du véhicule aérien 10, il est nécessaire de simuler également les interactions entre celui-ci et son environnement et notamment l'influence de l'avion sur son environnement.

Une telle simulation du sous-système «véhicule» 10 implique donc la simulation du système global 20, et, donc, du sous-système « atmosphère » 21.

Un tel système peut être simulé par des outils logiciels mettant en œuvre des techniques de mécanique des fluides numérique, CFD (pour « Computational Fluid Dynamics » en langue anglaise) afin de déterminer les interactions entre le véhicule 10, ou certaines parties 11 du véhicule, telles qu'une tuyère d'un turboréacteur, et l'environnement physique 21 dans lequel il circule.

On peut par exemple citer les logiciels commercialisés par la société Dassault Systèmes, tels que le produit logiciel « Simulia ». On peut également citer le logiciel « Flow Simulator » de la société HyperWorks, avec différents modules de simulation physique (« elsA » produit par l'ONERA, « Su2 » de l'université de Stanford, etc.), ou encore le logiciel AVBP développé par le CERFACS (Centre Européen de Recherche et de Formation Avancée en Calcul Scientifique).

La mécanique des fluides numérique (CFD) consiste à étudier les mouvements d'un fluide (par exemple l'air) et leurs effets par la résolution numérique des équations régissant le fluide. En fonction des approximations choisies, qui sont en général le résultat d'un compromis en termes de besoins de représentation physique par rapport aux ressources de calcul ou de modélisation disponibles, les équations résolues peuvent être les équations d'Euler, les équations de Navier-Stokes, etc.

De manière générale, la résolution d'un problème de mécanique des fluides numérique passe par

- la préparation du problème : ceci passe par la définition d'une géométrie, d'un maillage discrétisant le domaine de calcul, du choix des modèles et méthodes numériques employés ;

- la résolution numérique du problème qui passe par l'exécution d'un programme informatique mettant en œuvre une modélisation mathématique du comportement du système 20.

D'autres aspects du comportement du système 20 peuvent également être pris en charge tels que par exemple les aspects thermiques.

D'une façon générale, cette technique basée sur la mécanique des fluides vise à fournir un modèle basé sur des lois physiques comportementales, c'est-à-dire à approximer le comportement du système par des lois, ou équations, physiques. En appliquant ces lois, ou équations, on peut estimer le comportement du système.

Le maillage consiste à découper l'espace en cellules appelées « volumes de contrôle ». Le maillage est souvent délicat en mécanique des fluides car il faut mailler tout l'espace du système 20, y compris l'espace « vide » formé par l'environnement physique 21. Il en résulte donc un grand volume de maillage.

En outre, les détails de surface ont de l'importance puisqu'ils peuvent générer des turbulences. Il en résulte la nécessité d'un maillage très fin, notamment aux abords des surfaces (c'est-à-dire à l'interface entre l'avion 10 et l'environnement physique 21).

Dès lors, on a donc souvent des maillages contenant de très nombreuses mailles (typiquement plusieurs millions).

Par ailleurs, alors qu'en résistance des matériaux, un maillage hexaédrique de l'espace est une stratégie intéressante (elle permet d'avoir la même qualité de résultats pour un nombre de noeuds plus faibles), en mécanique des fluides numérique, cela introduit des directions préférentielles qui peuvent avoir une influence sur le résultat.

Aussi, d'autres types de maillage sont possibles, comme par le maillage hexaédrique, et des maillages non-uniformes, permettant des résolutions différentes ou des typologies ou orientations différentes, selon les zones. Par exemple, il est possible d'avoir

- à proximité des surfaces (interfaces avion/environnement), un maillage parallèle à la surface - hexaédrique ou bien prismatique (hexaèdres coupés en deux) - et de faible épaisseur (trois couches de cellules par exemple) ;

- au cœur des volumes, un maillage tétraédrique mais n'ayant pas de direction particulière, et par exemple, de moindre résolution.

Certains systèmes 20 à simuler peuvent être extrêmement complexes et mettre en jeu des phénomènes physiques divers. C'est notamment le cas d'un véhicule aérien comme un avion qui engendre des problématiques physiques différentes : portance des ailes, turbulence aux niveaux de l'admission (soufflante) et de la sortie (tuyères) des turboréacteurs, couche limite autour d'un aéronef etc.

Dès lors, le système peut être décomposé en une pluralité de modèles physiques, certains de ces modèles pouvant être dédiés ou adaptés à une partie du système 20.

Par exemple, les phénomènes de turbulences en admission ou en sortie des turboréacteurs ont fait l'objet d'études spécifiques sur les phénomènes aérodynamiques en jeu.

Une approche assez utilisée est le modèle des forces corporelles (ou « *body force model* », BFM, en langue anglaise) qui vise à remplacer les pales du turboréacteur par des champs de force équivalents. Ce modèle a été proposé par Marble, F. E, 1964, "Three-Dimensional Flow in Turbomachine" in High Speed Aerodynamics and Jet Propulsion, Vol. 10, Sec. C, Princeton University Press, pp. 83-166. Il a été largement appliqué depuis, ainsi que par exemple indiqué dans Hsiao, E., Naimi, M., Lewis, J.P., Dalbey, K., Gong, Y. et Tan, C., "Actuator Duct Model for Turbomachinery Components for Powered-Nacelle Navier-Stokes Calculations," Journal of Propulsion and Power, vol. 17, no. 4, July-August 2001, ou encore Thollet, William et Dufour, Guillaume et Carbonneau, Xavier et Blanc, Florian "Body-force modeling for aerodynamic analysis of air intake - fan interactions" in (2016) International Journal of Numerical Methods for Heat & Fluid Flow, vol. 26 (n° 7). pp. 2048-2065. ISSN 0961-5539. Un des avantages de ce modèle est son intégration dans les simulateurs de mécanique des fluides numérique, notamment dans les équations de Navier-Stokes calculées par moyenne de Reynolds (modèle RANS).

Certains modèles peuvent concerner la simulation de l'environnement 21, c'est-à-dire d'un fluide (en interaction avec un sous-système solide, tel qu'un véhicule aérien).

Ces modèles nécessitent le calcul de nombreuses variables, afin de capturer un état simulé du système.

Comme il a été vu précédemment, certaines de ces variables, comme la fonction de courant, engendrent des temps de calcul qui posent problèmes pour répondre aux requis d'une simulation dans des temps acceptables.

Selon un aspect de l'invention, on substitue le calcul de cette fonction de courant par les techniques habituelles utilisant des modèles basés sur les lois physiques comportementales selon la mécanique des fluides (CFD) par un réseau de neurones multicouche particulier.

Ce calcul, basé sur une prédiction par réseau de neurones, peut s'interfacer avec les autres composants d'un outil de simulation à la façon d'une boîte noire : le simulateur lui soumet des données d'entrée (notamment les coordonnées du point en lequel la fonction de courant doit être calculée) et récupère en sortie la valeur de cette fonction de courant. On parle du « couplage » d'un solveur physique avec un moteur d'inférence d'apprentissage machine.

D'une façon très macroscopique, les réseaux de neurones multicouches peuvent être vus comme des boîtes noires dont les paramètres internes doivent être ajustés lors d'une phase d'apprentissage, ou d'entrainement, en leur présentant à la fois des données d'entrée et une sortie souhaitée (ou « étiquette »). L'erreur entre cette sortie souhaitée et la sortie « naturelle » du réseau permet d'ajuster légèrement les paramètres pour diminuer l'erreur. En présentant un grand nombre de ces couples « données d'entrée / sortie souhaitée », le réseau apprend à réagir correctement et à fournir une bonne sortie lorsqu'on lui présente de nouvelles données d'entrée, non étiquetées.

Selon un mode de réalisation de l'invention, le réseau de neurones utilisé peut être un perceptron multicouche. D'autres architectures de réseaux neuronaux peuvent être possibles. Notamment, un réseau de neurones convolutif peut être utilisé (ConvNet ou CNN pour « *Convolutional Neural Network* » en anglais).

Un exemple de réseau de neurones multicouches est représenté en figure 2.

Le perceptron multicouches (ou « *multilayer perceptron* », MLP, en anglais) est un type de réseau neuronal artificiel organisé en plusieurs couches au sein desquelles une information circule de la couche d'entrée $L_1$ vers la couche de sortie $L_k$ uniquement ; il s'agit donc d'un réseau à propagation directe (« *feedforward* »). Chaque couche $L_1$, $L_2$, $L_3$... $L_k$ est constituée d'un nombre variable de neurones, respectivement $n_1$, $n_2$, n... $n_k$ Les neurones de la dernière couche (dite « de sortie ») sont les sorties du réseau de neurones et représentative d'une prédiction du modèle en réponse à une entrée fournie sur la couche $L_1$.

Dans un perceptron multicouches, chaque neurone $n_{i,j}$ est connecté en sortie à la totalité des neurones de la couche suivante $L_{i+1}$. Inversement, il reçoit en entrée les sorties de la totalité des neurones de la couche précédente $L_{i-1}$. Sur la figure 2, par clarté, seules quelques connexions sont représentées par des flèches orientées.

Chaque connexion est associée à un poids. L'ensemble des poids forment les paramètres internes du réseau de neurones. Ils doivent être déterminés lors d'une phase d'apprentissage (ou entrainement) et permettent ensuite de prédire des valeurs de sortie, par généralisation, à partir d'un nouveau vecteur d'entrée présenté sur la couche d'entrée $L_1$.

Chaque neurone $n_{i,j}$ effectue, classiquement, une somme pondérée de ces entrées par les poids des connexions associées puis applique à cette somme une fonction d'activation.

Plusieurs techniques existent pour déterminer les paramètres internes du réseau, les seuils, par apprentissage. On peut notamment citer l'algorithme de la descente du gradient stochastique (DGS ou SGD en anglais pour « *Stochastic Gradient Descent* »), décrit par exemple dans LeCun, Yann A., et al. "Efficient backprop. Neural networks: Tricks of the trade", Springer Berlin Heidelberg, 2012. 9-48. On peut également citer ADAM, décrit initialement dans Diederik P. Kingma and Jimmy Lei Ba. "Adam: A method for stochastic optimization". 2014. arXiv:1412.6980v9, ou bien RMSprop, décrit notamment dans Tijmen Tieleman et Geoffrey Hinton, « Lecture 6.5-rmsprop: Divide the gradient by a running average of its recent magnitude », COURSERA: neural networks for machine learning, 4(2):26-31, 2012.

Un des aspects de l'invention consiste à permettre l'apprentissage et la détermination de l'ensemble des paramètres du réseau de neurones multicouches. Les paramètres du réseau de neurones comprennent notamment les paramètres internes, ou poids, associés aux connexions entre neurones. Ces poids (ou poids synaptiques) sont déterminés de façon itérative par apprentissage, ou entrainement, ainsi que précédemment décrit.

D'une façon générale, le réseau de neurones multicouches est entraîné au moyen de données d'entrainement (ou d'apprentissage) issues soit du monde physique (c'est-à-dire des mesures), soit d'une modélisation du monde physique, c'est-à-dire d'un modèle basé sur des lois physiques comportementales telles que précédemment évoquées. Il est ainsi possible d'entrainer le réseau de neurones sur la base d'un ensemble d'apprentissage généré par la simulation d'une dynamique physique connue, par exemple basée sur la mécanique des fluides computationnelle (CFD).

Modélisation physique comportementale

Cette simulation peut se baser sur les équations de Navier-Stokes qui décrivent le comportement d'un fluide, ainsi que précédemment évoqué.

Il est possible de supposer que d'une part il n'existe pas de dissipation de chaleur et que d'autre part le fluide est incompressible, c'est-à-dire que la densité massique $\rho$ du fluide est constante. Cette hypothèse apparaît raisonnable pour des vitesses du véhicule n'excédant pas quelques nombres de Mach, ce qui reste acceptable dans de nombreux cas d'étude aéronautique. On peut alors écrire $\nabla . u = 0$

Selon cette double hypothèse, ces équations de Navier-Stokes peuvent s'exprimer selon une formulation eulérienne suivante :

$$\dot{u} + u.\nabla \mathrm{u} = -\frac{1}{\rho}\nabla p + v\nabla^2 u$$

dans laquelle u représente un vecteur fonction des coordonnées x, y d'un point sur une surface 2D modélisée, et du temps, p un scalaire également fonction des coordonnées x, y et du temps t ; v est la viscosité cinématique et $\nabla$ est l'opérateur gradient, qui correspond à un laplacien lorsqu'appliqué deux fois.

Le champ vectoriel u représente le champs de vitesse (ou vélocité) du fluide dans un espace (x,y).

Sous l'hypothèse d'incompressibilité, on peut réécrire cette équation selon la décomposition de Hodge-Helmholtz :

$$u = \nabla \Phi + \nabla \times \vec{\psi}$$

Le théorème de Helmholtz-Hodge, également appelé théorème fondamental du calcul vectoriel, assure qu'un champ vectoriel se décompose en une composante « longitudinale » (irrotationnelle) et une composante « transverse » (solénoïdale), soit la somme du gradient d'un champ scalaire et du rotationnel d'un champ vectoriel.

Cette équation met ainsi en évidence un potentiel de vitesse (une valeur scalaire) $\Phi$ qui représente la partie irrotationnelle du champ vectoriel de vitesse u; et une fonction de courant $\psi$ (ou « *streamfunction* » en anglais), représentant la partie solénoïdale du champ vectoriel u.

On peut par ailleurs définir la « vorticité », ou vecteur tourbillon, $\omega$, comme le rotationnel du champs de vitesse u du fluide.

$$\omega = \nabla \times u$$

Le tourbillon (ou « vortex ») est une quantité vectorielle dont la direction est le long de l'axe de rotation du fluide. Ainsi, pour un flux à deux dimensions quelconque, le vecteur de tourbillon se retrouve dans l'axe perpendiculaire au plan de rotation.

En prenant le rotationnel de l'équation de Navier-Stokes, on obtient l'équation de tourbillon :

$$\dot{\omega} + u.\nabla \omega = v\nabla^2 \omega$$

On peut noter que la contribution de $\nabla p$ dans l'équation de Navier-Stokes n'apparait plus puisque le rotationnel d'un gradient est toujours nul.

Cette équation peut être interprétée en définissant la dérivée matérielle (ou dérivée substantielle, ou encore «dérivée selon le mouvement»), $D\omega)/Dt$. Cette quantité représente le taux de variation de la vorticité par rapport au champ de vitesse u.

$$\frac{D\omega}{Dt} = \dot{\omega} + u.\nabla \omega$$

Dans cette expression, la quantité $u.\nabla \omega$ représente la partie advective de la variation (c'est-à-dire liée au déplacement du fluide).

Si l'on suppose la densité du fluide constante, le taux de variation de la vorticité se simplifie en ne s'exprimant que par rapport à la force de viscosité :

$$\frac{D\omega}{Dt} = v.\nabla \omega$$

On rappelle que v représente la viscosité cinématique.

Par ailleurs, en prenant le rotationnel de la décomposition de Helmholtz-Hodge, on obtient l'équation de Poisson pour la fonction de courant :

$$\omega = -\nabla^2 \psi = \Delta \psi$$

En combinant cette dernière équation avec l'équation de tourbillon précédemment formulée, on obtient :

$$\begin{cases} \dot{\omega} + (\nabla \times \psi).\nabla \omega = v\nabla^2 \omega \\ \Delta \psi = -\omega \end{cases}$$

On obtient donc ainsi un système de deux équations à deux inconnues : la vorticité $\omega$ et la fonction de courant $\psi$.

.Ce système peut être résolu par différentes méthodes numériques. En particulier, la *méthode FTCS (Forward-Time Central-Space scheme) décrite dans le document* « PyCFD - A Pythonic introduction to numerical techniques used in computational fluid dynamics », accessible sur le site http://ohllab.org/CFD course/ peut être utilisée.

Cette méthode consiste à discrétiser ces équations selon les coordonnées spatiales (x, y) et selon le temps t, selon un maillage constant $\Delta x$, $\Delta t$. À chaque itération temporelle, l'équation de Poisson peut être résolue par la méthode itérative de Jacobi : étant donné un champ de vorticité $\omega$, on peut optimiser une estimation de la fonction de courant par approximations successives. Le document précité donne, dans son chapitre 5, « Vorticity-Streamfunction Formulation », un code en langage Python pour ce faire.

## Apprentissage du réseau de neurones multicouches

On rappelle que la fonction de courant $\psi$ peut s'exprimer, selon la décomposition de Helmholtz-Hodge.

$$u = \nabla \Phi + \nabla \times \vec{\psi}$$

Dans le cas d'un champ surfacique, Lamb et Batchelor ont défini cette fonction, pour un fluide incompressible (comme l'atmosphère) par l'expression :

$$\psi = \int\limits_{0,0}^{x,y} (u_x dy - u_x dx)$$

La fonction de courant est considérée comme n'ayant qu'une composante selon la normale au plan (x,y). On peut donc remplacer le vecteur $\vec{\psi}$ par la valeur scalaire $\psi$ sur cet axe normal.

Le champ de vitesse est tangent à des lignes de champ de courant constant. Ces lignes sont classiquement appelées lignes de courant et correspondent aux trajectoires des particules du fluide.

Sous l'hypothèse de non-divergence, du fait de la non-compressibilité du fluide, on peut écrire

$$\begin{cases} \dot{x} = u_x = \dfrac{d\psi}{dy} \\ \dot{y} = u_y = -\dfrac{d\psi}{dx} \end{cases}$$

On peut remarquer que ce système correspondant à une structure hamiltonienne selon les coordonnées spatiales x,y.

La mécanique hamiltonienne est une reformulation de la mécanique newtonienne. Elle a été formulée par William Rowan Hamilton en 1833 à partir des équations de Lagrange et son formalisme a notamment facilité l'élaboration théorique de la mécanique quantique.

Les équations d'Hamilton associe à chaque point (x,y) d'un espace une valeur, nommée « Hamiltonien » et notée H. Il a été démontré que l'Hamiltonien d'un système était égal à son énergie totale, c'est-à-dire à la somme de l'énergie cinétique et de l'énergie potentielle.

La fonction de courant $\psi$ pouvant être exprimée comme un Hamiltonien représente donc une énergie du système, et les lignes de courant représentent des lieux d'énergie constante, c'est-à-dire au sein desquelles les particules du fluide peuvent se déplacer.

Ces lignes de courant sont définies par le gradient symplectique du Hamiltonien $(\dot{x}, \dot{y})$, avec

$$\begin{pmatrix} \dot{x} \\ \dot{y} \end{pmatrix} = \begin{pmatrix} \dfrac{d\psi}{dy} \\ -\dfrac{d\psi}{dx} \end{pmatrix}$$

Le gradient symplectique permet donc de définir les lignes de courant comme le lieu où le gradient est nul et, donc, où la fonction de courant (Hamiltonien) est constante. Ces lignes de courant représentent le lieu où les déplacements sont physiquement possibles pour les particules du fluide, en vertu du principe de moindre action.

Autrement dit, on peut remarquer que le champ de vitesse u ($u_x$, $u_y$) est le gradient symplectique de la fonction de courant.

Cette propriété peut être exploitée pour guider l'apprentissage du réseau de neurones multicouches. Plus particulièrement, on entraine à un réseau de neurones multicouche afin de remplacer le calcul de la fonction de courant $\psi$, en lui donnant des exemples non pas de ce que ses sorties ($\psi$) devraient être, mais de ce que les dérivées ($u_x$, $u_y$) de ses sorties devraient être.

Autrement dit, on structure l'ensemble d'apprentissage pour disposer de la dérivée de la fonction de courant, pour chaque point x,y, de l'ensemble, et on détermine une fonction de coût (ou « loss function » en langue anglaise) pour mesurer un écart entre la dérivée de la sortie du réseau de neurones et la dérivée fournies dans l'ensemble d'apprentissage. Cet écart peut ensuite faire l'objet d'une rétro-propagation de son gradient (il s'agit donc d'un gradient de gradient), afin d'itérativement faire évoluer les poids synaptiques du réseau de neurones multicouches jusqu'à constitution d'un modèle pouvant être utilisé en prédiction pour fournir d'une part la fonction de courant et son gradient, le champ de vitesse.

La figure 3 illustre l'utilisation d'un réseau de neurones selon un mode de réalisation.

La structure du réseau de neurones HNN peut être diverse. À titre d'exemple, on peut considérer un réseau de 3 couches densément connectées. La couche cachée peut par exemple comporter 200 neurones. La fonction d'activation peut être la fonction tanh. L'optimisation avec la méthode Adam (« adaptative moments ») peut être également utilisée. Celle-ci est décrite dans l'article de Diederik P. Kingm et Jimmy Ba, « Adam: A method for stochastic optimization », arXiv:1412.6980, 2014.

On présente en entrée du réseau de neurones HNN les coordonnées x,y d'un point de l'espace du fluide à simuler. On entraine le réseau de neurones afin que sa sortie soit la fonction de courant $\psi$.

Aussi, si l'on présente en entrée des coordonnées x,y de points appartenant à une même ligne de courant, la sortie du réseau de neurones sera constante.

Comme il a pu être mis en avant une expression hamiltonienne de la fonction de courant, il est possible d'en tirer profit pour utiliser un réseau de neurones hamiltonien.

Les réseaux de neurones hamiltoniens ont été décrits dans l'article fondateur de Sam Greydanus, Misko Dzamba et Jason Yosinski, « Hamiltonian Neural Networks », CoRR, abs/1906.01563, 2019.

Un réseau de neurones hamiltonien HNN est un réseau de neurones multicouches avec une fonction de coût (ou « loss function » en anglais) particulière, basé sur une valeur hamiltonienne.

Selon l'invention, on utilise l'expression hamiltonienne de la fonction de courant, afin d'en tirer la fonction de coût servant à l'apprentissage du réseau de neurones HNN. En particulier, à partir de l'expression hamiltonienne de la fonction de courant, on en tire les résidus :

$$\begin{cases} \dfrac{dx}{dt} - \dfrac{d\psi}{dy} = 0 \\ \dfrac{dy}{dt} + \dfrac{d\psi}{dx} = 0 \end{cases}$$

Et de là, on peut définir une fonction de coût $\mathcal{L}$ par l'expression suivante :

$$\mathcal{L} = \left\| \frac{dx}{dt} - \frac{d\psi}{dy} \right\|^2 + \left\| \frac{dy}{dt} + \frac{d\psi}{dx} \right\|^2$$

Cette fonction de coût n'est pas directement calculée à partir de la sortie $\psi$ du réseau de neurones HNN mais à partir du gradient $S_\psi$, de la sortie du réseau de neurones.

D'une façon pratique, les plateformes récentes mettant en œuvre des réseaux de neurones proposent des interfaces logicielles permettant d'obtenir des informations intermédiaires sur l'état interne du réseau de neurones.

Notamment, les méthodes d'enregistrement du gradient (« gradient taping » en langue anglaise et selon la terminologie des fonctions logicielles), des modules d'auto-différentiation des plateformes d'apprentissage machine modernes (telles TensorFlow, PyTorch...) permettent de réutiliser les gradients obtenus lors de l'apprentissage par rétro-propagation (voir, par exemple, https://www.tensorflow.org/guide/autodiff)

Aussi, le gradient $S_\psi$, est extrait du réseau de neurones afin de permettre le calcul de la fonction de coût $\mathcal{L}$ .

$$S_\psi = \begin{pmatrix} \dfrac{d\psi}{dy} \\ -\dfrac{d\psi}{dx} \end{pmatrix}$$

Ce gradient extrait correspond, physiquement, au gradient symplectique de la fonction de courant, c'est-à-dire au champ de vitesse $u = (u_x, u_y)$ :

$$\begin{cases} \dot{x} = u_x = \dfrac{d\psi}{dy} \\ \dot{y} = u_y = -\dfrac{d\psi}{dx} \end{cases}$$

C'est-à-dire, on doit pouvoir vérifier, en convergence $u = S_\psi$

La différence entre le gradient symplectique $S_\psi$ en sortie du réseau de neurones et le champ de vitesse $u = \left( u_x, u_y \right) = \left( \frac{dx}{dt}, \frac{dy}{dt} \right)$ forme donc l'erreur du réseau de neurones évaluée par la fonction de coût $\mathcal{L}$ .

L'apprentissage peut être effectué par la génération d'un ensemble d'apprentissage extrait de la fonction de courant $\psi$. Comme il a été vu, la valeur de la fonction de courant dépend des coordonnées x,y et du temps t. On peut choisir donc des vecteurs (x,y) aléatoires à t fixé et calculer la valeur $\psi(x,y,t)$ ainsi que les vitesses $\dot{x},\dot{y},$ par une modélisation mathématique, notamment sur la base d'un modèle physique utilisés en dynamique des fluides computationnelle, CFD, tels que ceux basés sur les équations de Navier-Stokes et précédemment décrits.

Comme il a été vu, les calculs selon ce type de modèle demandent un important temps de calcul et d'importantes ressources, mais ces calculs visent à la construction d'un ensemble d'apprentissage et ne sont pas imputés sur le temps de la simulation proprement dit : une fois celui-ci entrainé, le réseau de neurones HNN peut être utilisé pour la simulation sans l'impact de la simulation CFD en termes de coût computationnel. En effet, l'inférence d'un réseau de neurones possède un coût constant, qui ne dépend pas de la complexité des données.

Un autre avantage de l'invention est d'être indépendante d'une discrétisation de l'espace simulé. En effet, on peut fournir des coordonnées x, y, quelconques en entrée du réseau de neurones HNN et obtenir, par inférence, une prédiction « interpolée » de la fonction de courant et du champ de vitesses.

Selon l'invention, le réseau de neurones multicouches conserve une sortie constante correspondant à l'énergie totale du système, représentée par la fonction de courant $\psi$.

L'ensemble des paramètres du réseau (formant le modèle proprement dit) parcourt donc un ensemble correspondant à une réalité physique possible, c'est-à-dire à la conservation de l'énergie dans la réalité physique déterminée par la prédiction du réseau de neurones.

Il s'agit là d'un avantage substantiel par rapport aux réseaux de neurones conventionnels, dont l'apprentissage n'est pas contraint par une fonction de coût informée par la réalité physique.

En prédiction, le réseau de neurones peut être utilisé en appliquant en entrée des coordonnées x, y d'un point de l'espace pour lequel on souhaite connaître le comportement du flux, et en particulier sa vitesse x,y.

Du fait de son entrainement, la sortie du réseau de neurones (c'est-à-dire, la valeur d'activation des neurones de la couche de sortie) donne la valeur de la fonction de courant $\psi$. Si l'on fait parcourir une ligne de courant au point (x,y), la sortie du réseau de neurones sera donc constante.

Il est par ailleurs possible d'accéder aux dérivées temporelles qui sont nativement calculées par le réseau de neurones hamiltonien, de la même façon que lors de l'entrainement. On peut donc obtenir, en sortie du réseau de neurones, à la fois sa sortie « native », la fonction de courant, et son gradient symplectique $S_\psi$, c'est-à-dire le champ de vitesse u.

La figure 4 illustre les performances en apprentissage d'un réseau de neurones selon un mode de réalisation de l'invention (courbe HNN), basé sur les gradients de la fonction de courant, en comparaison d'un réseau de neurones conventionnel (courbe ANN), c'est-à-dire utilisant une fonction de coût agnostique par rapport à la réalité physique et basée, donc, sur une mesure d'erreur entre une sortie native et une sortie escomptée. Le réseau ANN possède la même topologie et donc le même nombre de paramètres appris, cela permet de mesurer l'apport de la structure hamiltonienne, toutes autres choses maintenues égales.

On remarque un gain appréciable en vitesse de convergence en fonction du nombre d'exemples fournis (itérations). L'erreur figure en ordonnée.

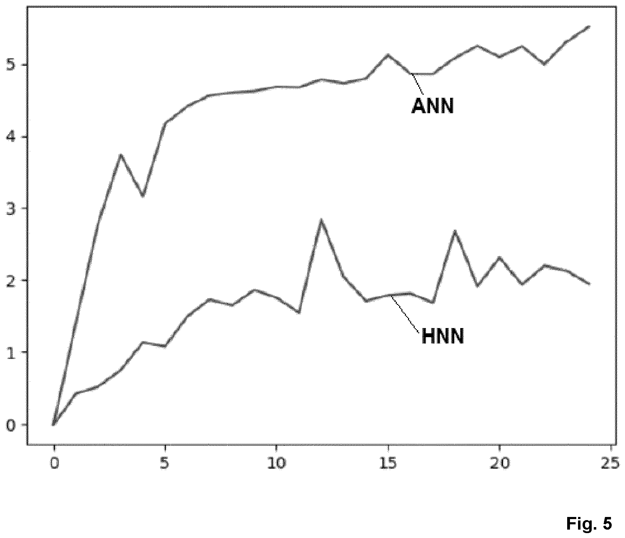

La figure 5 illustre les performances en prévision entre ces deux mêmes réseaux de neurones (courbes HNN and ANN). Le test mesure l'évolution des prédictions au fil des itérations (en abscisse) à partir de conditions initiales : on remarque que la courbe ANN diverge au fil des itérations et que la prédiction du réseau est associée à une erreur grandissante par rapport à une réalité établie par un modèle conventionnel basé sur la mécanique des fluides numérique, CFD. Au contraire, le courbe HNN montre une erreur relativement stable et très inférieure à celle obtenue par le réseau ANN.

Selon un mode de réalisation de l'invention, le réseau de neurones peut être mis en œuvre sous la forme d'un module logiciel configuré pour s'interfacer avec les outils de simulation disponibles sur le marché. Selon un autre mode de réalisation, le réseau de neurones est mis en œuvre sous la forme d'un outil autonome.

Ce module peut être déployé sur un serveur, sur un groupe, ou ferme, de serveurs. Il peut également être accessible à travers un réseau de communication tel qu'Internet, par exemple sous la forme d'un service disponible via un nuage informatique (ou « cloud » en langue anglaise).

Selon un mode de réalisation, un serveur, ou dispositif, mettant en œuvre le procédé de simulation selon l'invention, peut comporter des circuits et des mémoires permettant de stocker notamment le code informatique implémentant la méthode, et en particulier le réseau de neurones.

Ainsi, l'invention permet d'éviter le calcul à chaque itération de la fonction de courant par les équations de la mécanique des fluides numérique, CFD, pendant la simulation, en remplaçant ce calcul par l'inférence d'un réseau de neurones qui présent l'avantage de présenter un coût computationnel constant. En outre, selon l'invention, ce réseau de neurones prend en compte la réalité physique dans sa conception même, de sorte que ses performances en qualité des prédictions et en vitesse de convergence lors de l'apprentissage, sont supérieures à celles de l'état de la technique. On arrive ainsi à des précisions très élevées tout en permettant de réduire le temps de calcul nécessaire pour la simulation.

Il est ainsi possible de simuler le comportement de systèmes physiques complexes dans un temps raisonnable. L'invention peut notamment s'appliquer à la simulation de véhicules aériens, tels des avions, dans l'atmosphère, mais également à tout système physique pouvant être décrit par la mécanique des fluides, et notamment de parties, ou éléments, de ces véhicules (ailes, pales...). Comme il a été vu plus haut, il peut s'agir aussi de la simulation de systèmes météorologiques, par exemple, ou bien du comportement des courants océaniques, ou encore du comportement d'un sous-système solide vis-à-vis d'un environnement constitué d'un milieu fluide (éolienne dans le milieu fluide de l'air, ou autres dispositifs fonctionnant de manière similaire, c'est-à-dire avec des pales plongées dans un flux de fluide : compresseurs radiaux et axiaux dans les turboréacteurs d'avion, dans les dispositifs de climatisation, dans les gazoducs, dans les turbocompresseurs, etc.)

D'une façon générale, le terme «circuit» est compris dans la présente demande comme comprenant des éléments matériels éventuellement associés à des éléments logiciels dans la mesure où certains éléments matériels peuvent être programmés. Notamment, le terme circuit comprend des mises en œuvre purement matérielles, sous forme de circuits numériques ou analogues imprimés spécifiquement, des mises en œuvre basés, entièrement ou partiellement, sur des éléments de type microprocesseur ou processeur, qui font l'objet d'une programmation par des instructions logicielles stockées dans une ou plusieurs mémoires associées, etc. Les instructions logicielles peuvent consister uniquement aux instructions nécessaires pour les opérations de base des processeurs (le *« firmware »*) tandis que les instructions logicielles nécessaires à la réalisation des fonctions des modes de réalisation de l'invention peuvent être stockées soit dans ces mêmes mémoires associées aux processeurs, soit dans des mémoires déportées. Dans ce dernier cas, ces instructions logicielles ne sont présentes dans le circuit que lorsque le circuit est en opération pour réaliser les fonctions selon les modes de réalisation de l'invention.

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Procédé de simulation du comportement d'un système (20) composé d'un sous-système (10), tel que tout ou parti d'un véhicule aérien, dans un environnement physique (21) constitué d'un fluide incompressible, comportant

   - l'entraînement d'un réseau de neurones multicouche (HNN) au moyen d'un ensemble d'apprentissage associant des coordonnées (x, y) dans ledit environnement physique (21) et des valeurs respectives d'un gradient de la fonction de courant ($\psi$) auxdites coordonnées (x,y), et d'une fonction de coût configurée pour minimiser une erreur entre un gradient ($S_\psi$) de la sortie dudit réseau de neurones et ledit gradient de la fonction de courant ;
   - l'utilisation dudit réseau de neurones pour prédire une valeur de fonction de courant ($\psi$) et d'un champ de vitesse (u) en lui fournissant en entrée des coordonnées.

2. Procédé selon la revendication 1, dans lequel ladite fonction de coût ($\mathcal{L}$) s'exprime

$$\mathcal{L} = \left\|\frac{dx}{dt} - \frac{d\psi}{dy}\right\|^2 + \left\|\frac{dy}{dt} + \frac{d\psi}{dx}\right\|^2$$

où t représente le temps.

3. Procédé selon l'une des revendications précédentes, dans lequel ledit ensemble d'apprentissage est généré en déterminant la valeur $\psi(x,y,t)$ de ladite fonction de courant, pour des coordonnées, x,y choisis aléatoirement et un temps t fixé dans ledit environnement physique (21).

4. Procédé selon la revendication précédente, dans lequel ladite valeur est déterminée sur la base d'un modèle physique utilisé en dynamique des fluides computationnelle, CFD, tels que ceux basés sur les équations de Navier-Stokes.

5. Procédé selon la revendication précédente, dans lequel ledit véhicule aérien est un avion.

6. Programme d'ordinateur comprenant des instructions qui, lorsque le programme est exécuté par un ordinateur, conduisent celui-ci à mettre en œuvre la méthode selon l'une des revendications 1 à 5.

7. Dispositif de simulation du comportement d'un système (20) composé d'un sous-système (10), tel que tout ou parti d'un véhicule aérien, dans un environnement physique (21) constitué d'un fluide incompressible, comportant des moyens pour

   - l'entraînement d'un réseau de neurones multicouche (HNN) au moyen d'un ensemble d'apprentissage associant des coordonnées (x, y) dans ledit environnement physique (21) et des valeurs respectives d'un gradient de la fonction de courant ($\psi$) auxdites coordonnées (x,y), et d'une fonction de coût configurée pour minimiser une erreur entre un gradient ($S_\psi$) de la sortie dudit réseau de neurones et ledit gradient de la fonction de courant ; et pour
   - l'utilisation dudit réseau de neurones pour prédire des valeurs de fonction de courant ($\psi$) et d'un champ de vitesse (u) en lui fournissant en entrée des coordonnées.

8. Dispositif selon la revendication 7, dans lequel ladite fonction de coût ($\mathcal{L}$) s'exprime

$$\mathcal{L} = \left\|\frac{dx}{dt} - \frac{d\psi}{dy}\right\|^2 + \left\|\frac{dy}{dt} + \frac{d\psi}{dx}\right\|^2$$

où t représente le temps.

9. Dispositif selon l'une des revendications 7 ou 8, comportant en outre des moyens pour générer ledit ensemble d'apprentissage en déterminant la valeur $\psi(x,y,t)$ de ladite fonction de courant, pour des coordonnées, x,y choisis aléatoirement et un temps t fixé dans ledit environnement physique (21).

10. Dispositif selon la revendication précédente, dans lequel ladite valeur est déterminée sur la base d'un modèle physique utilisé en dynamique des fluides computationnelle, CFD, tels que ceux basés sur les équations de Navier-Stokes.

11. Dispositif selon la revendication précédente, dans lequel ledit véhicule aérien est un avion.

**12.** Dispositif selon l'une des revendications 7 à 11, comportant en outre une interface pour récupérer lesdites coordonnées et fournir lesdites valeurs à un outil de simulation.

**13.** Serveur, ou ensemble de serveurs, mettant en œuvre un dispositif selon l'une des revendications 7 à 12 et comportant des interfaces permettant de le rendre accessible sous la forme d'un service disponible via un nuage informatique]

Fig. 1

Fig. 2

**Fig. 3**

**Fig. 4**

**Fig. 5**

Europäisches
Patentamt

European
Patent Office

Office européen
des brevets

**RAPPORT DE RECHERCHE EUROPEENNE**

Numéro de la demande

EP 21 30 5044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHENGPING RAO ET AL: "Physics-informed deep learning for incompressible laminar flows", ARXIV.ORG, CORNELL UNIVERSITY LIBRARY, 201 OLIN LIBRARY CORNELL UNIVERSITY ITHACA, NY 14853, 24 février 2020 (2020-02-24), XP081607268, * section 2 * * figures 1, 2 * * abrégé * * le document en entier * | 1-13 | INV. G06F30/27 G06F30/28 ADD. G06F113/08 |
| X | NILS WANDEL ET AL: "Unsupervised Deep Learning of Incompressible Fluid Dynamics", ARXIV.ORG, CORNELL UNIVERSITY LIBRARY, 201 OLIN LIBRARY CORNELL UNIVERSITY ITHACA, NY 14853, 15 juin 2020 (2020-06-15), XP081696810, * abrégé * * sections 3-3.3, 3.6 * * figures 1-3 * * le document en entier * | 1-13 | DOMAINES TECHNIQUES RECHERCHES (IPC) G06F |
| X | BYUNGSOO KIM ET AL: "Deep Fluids: A Generative Network for Parameterized Fluid Simulations", ARXIV.ORG, CORNELL UNIVERSITY LIBRARY, 201 OLIN LIBRARY CORNELL UNIVERSITY ITHACA, NY 14853, 6 juin 2018 (2018-06-06), XP081021594, * abrégé * * equation 1 * * sections 3-3.2 * * le document en entier * | 1-13 | |

-/--

Le présent rapport a été établi pour toutes les revendications

| Lieu de la recherche | Date d'achèvement de la recherche | Examinateur |
|---|---|---|
| Munich | 11 juin 2021 | Joris, Pierre |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

page 1 de 2

# EP 4 030 333 A1

| Europäisches Patentamt / European Patent Office / Office européen des brevets | **RAPPORT DE RECHERCHE EUROPEENNE** | Numéro de la demande EP 21 30 5044 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SIFAN WANG ET AL: "Understanding and mitigating gradient pathologies in physics-informed neural networks", ARXIV.ORG, CORNELL UNIVERSITY LIBRARY, 201 OLIN LIBRARY CORNELL UNIVERSITY ITHACA, NY 14853, 13 janvier 2020 (2020-01-13), XP081578179, * abrégé * * sections 3.3-3.5 * * figures 17, 18 * * le document en entier * ----- | 1-13 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 11 juin 2021 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 2 de 2

17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. ABBAS-BAYOUMI ; K. BECKER.** An industrial view on numerical simulation for aircraft aerodynamic design. *Journal of Mathematics in Industry,* 2011, vol. 1 (1), 10
- **LUIS LÓPEZ DE VEGA ; GUILLAUME DUFOUR ; FLORIAN BLANC ; WILLIAM THOLLET.** A Machine Learning Based Body Force Model for Analysis of Fan-Airframe Aerodynamic Interactions. *Global Power and Propulsion Society Conférence 2018,* 07 Mai 2018
- Three-Dimensional Flow in Turbomachine. **MARBLE, F. E.** High Speed Aerodynamics and Jet Propulsion. Princeton University Press, 1964, vol. 10, 83-166
- **HSIAO, E. ; NAIMI, M. ; LEWIS, J.P. ; DALBEY, K. ; GONG, Y. ; TAN, C.** Actuator Duct Model for Turbomachinery Components for Powered-Nacelle Navier-Stokes Calculations. *Journal of Propulsion and Power,* Juillet 2001, vol. 17 (4
- **THOLLET, WILLIAM ; DUFOUR, GUILLAUME ; CARBONNEAU, XAVIER ; BLANC, FLORIAN.** Body-force modeling for aerodynamic analysis of air intake - fan interactions. *International Journal of Numerical Methods for Heat & Fluid Flow,* 2016, vol. 26 (7), ISSN 0961-5539, 2048-2065

- **LECUN, YANN A. et al.** Efficient backprop. Neural networks: Tricks of the trade. Springer Berlin, 2012, 9-48
- **DIEDERIK P. KINGMA ; JIMMY LEI BA.** *Adam: A method for stochastic optimization,* 2014
- **TIJMEN TIELEMAN ; GEOFFREY HINTON.** Lecture 6.5-rmsprop: Divide the gradient by a running average of its recent magnitude. *COURSERA: neural networks for machine learning,* 2012, vol. 4 (2), 26-31
- *PyCFD - A Pythonic introduction to numerical techniques used in computational fluid dynamics, http://ohllab.org/CFD course/*
- Vorticity-Streamfunction Formulation
- **DIEDERIK P. KINGM ; JIMMY BA.** *Adam: A method for stochastic optimization,* 2014
- **SAM GREYDANUS ; MISKO DZAMBA ; JASON YOSINSKI.** Hamiltonian Neural Networks. *CoRR,* 2019